# EUROPÄISCHE PATENTANMELDUNG

(11) **EP 1 134 094 A2**
(43) Veröffentlichungstag der Anmeldung: **19.09.2001**
(21) Anmeldenummer: 01102358.7
(22) Anmeldetag: 02.02.2001
(51) Int. Cl.: B60B 3/06, B60B 3/04, B60B 3/10

(54) **Zweigeteiltes Rad für ein Kraftfahrzeug**

(30) Priorität: 16.03.2000 DE 10012891
(71) Anmelder: Dr.Ing. h.c.F. Porsche Aktiengesellschaft, 70435 Stuttgart (DE)
(72) Erfinder: Stach, Jens, 71296 Heimsheim (DE)

(57) **Zusammenfassung**

Bei einem zweigeteilten Rad für ein Kraftfahrzeug ist der Felgenstern (2) mit Hohlspeichen (4) versehen, in denen ein Metallschaumkern verbleibend angeordnet ist. Der Felgenstern (2) wird mit der Felge (3) über zwei Schweiß-Ringflächen mit einer Felge mittels einer Reibschweißung verbunden. Der Metallschaumkern (6) ist in besonderer Weise zum positionierten Lagern im Kokillenwerkzeug mit einem Teilkern versehen, der sich am Oberkern des Kokillenwerkzeugs (9,10) abstützt. Über Schieber, die am Umfang des Felgensterns verteilt angeordnet sind, wird eine Beeinflussung der Wärme bzw. des Kälteverhaltens beim bzw. nach dem Gießen beeinflußt.

## Beschreibung

Die Erfindung bezieht sich auf ein zweigeteiltes Rad nach dem Anspruch 1.

Aus der DE 41 38 558 A1 ist ein Fahrzeugrad bekannt, das zweigeteilt in einem Kokillenwerkzeug hergestellt wird bzw. bei dem der Felgenstern gegossen und die Felge in anderer Weise herstellbar ist. Eine Verbindung der beiden Radteile, wie dem Felgenstern und der Felge, erfolgt mittels einer Reibschweißung, wobei im Felgenstern zwei beabstandete Schweiß-Ringflächen vorgesehen sind, an denen gegenüberstehende Schweiß-Ringflächen der Felge angeordnet sind. In dem Rad sind Hohlspeichen vorgesehen, die durch einen Sandkern ausgebildet sind, der nach dem Guß entfernt wird. Desweiteren ist aus der DE 197 54 959 A1 ein einteiliges Fahrzeugrad bekannt, das in Hohlspeichen einen verbleibenden Metallschaumkern aufweist.

Aufgabe der Erfindung ist es, ein zweigeteiltes Fahrzeugrad mit einem Metallschaumkern zu schaffen, der in einfacher Weise in das Rad integrierbar ist und die Radteile aus verschiedenen Materialen bestehen können und in einfacher Weise stoffschlüssig zu verbinden sind.

Diese Aufgabe wird erfindungsgemäß durch die Merkmale des Anspruchs 1 gelöst. Weitere vorteilhafte Merkmale beinhalten die Unteransprüche.

Ein zweigeteiltes Rad mit Hohlspeichen und in den Hohlräumen verbleibenden Metallschaumkernen zu versehen ist aus Gewichtsgründen vorteilig. Die Wandungen der Hohlspeichen und die Wandungen von weiteren Hohl- bzw. Ringräumen im Rad können dünnwandiger gestaltet werden, da der Metallschaumkern eine gewisse Festigkeit in das Rad hineinbringt.

Die Herstellung des Felgensterns im Kokillenwerkzeug wird durch die Abstützung des Metallschaumkerns im Oberkern bestimmt, da dieser den Hohlraum der Speichen ausformend bildet.

Hierzu ist der herausgeführte Teil des Metallschaumkerns in einer Ebene im Grund eines Oberkerns des Kokillenwerkzeugs abgestützt. Die Schweiß-Ringflächen des Felgensterns sind in diesen Teilkern eingeschlossen und der Teilkern erstreckt sich bis zur Ebene einer Hump-Fläche des Felgensterns. In dieser Ebene erfolgt die Teilung des Kokillenwerkzeugs in den Oberkern und den Unterkern.

Damit in vorteilhafter Weise ein günstiger Wärmehaushalt beim Gießen und in der Erkaltungsphase erzielbar ist, ist das Kokillenwerkzeug mit sogenannten Schiebern versehen, die umfangsseitig des Metallschaumkerns bzw. des Felgensterns angeordnet sind.

Die Verbindung des Felgensterns mit der Felge über eine bekannte Reibschweißung ergibt in vorteilhafter Weise eine Vielfalt von Kombinationsmöglichkeiten hinsichtlich der Werkstoffauswahl für den Felgenstern und die Felge als auch des Metallschaumkerns. Die den Kern umgebenden Wandungen können somit auch unterschiedliche Dicken aufweisen oder aber innerhalb der Hohlspeichen können zusätzlich zum Metallschaumkern auch Rippen, Stege und dgl. Verstärkungen vorgesehen sein.

Ein Ausführungsbeispiel der Erfindung ist in den Zeichnungen dargestellt und wird im Folgenden näher beschrieben.

Es zeigen
- Fig. 1: ein Fahrzeugrad mit einem Metallschaumkern im Schnitt,
- Fig. 2: eine Darstellung eines Felgensterns des Fahrzeugrades mit einem im Oberkern des Kokillenwerkzeugs positioniert gelagertem Kernteil des Metallschaumkerns und
- Fig. 3: eine weitere Darstellung des Felgensterns mit dem Metallschaumkern gemäß Fig. 2, nur in einem anderen Schnitt gezeigt, in der Schieber des Kokillenwerkzeugs sichtbar sind.

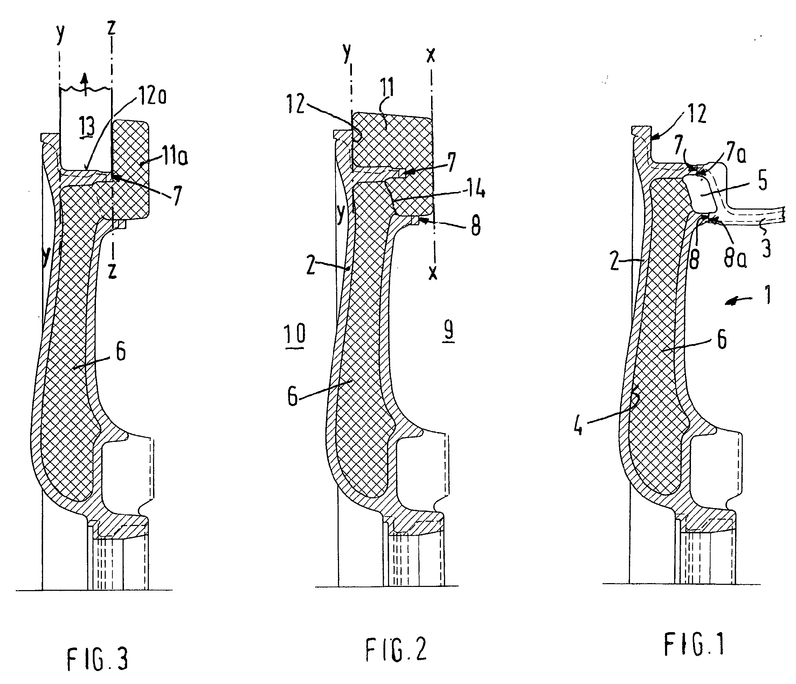

In Figur 1 ist ein Fahrzeugrad 1, bestehend aus einem Felgenstern 2 und einer Felge 3 gezeigt. Im Rad 1 sind Hohlspeichen 4 und Ringräume vorgesehen, wobei zumindestens die Hohlspeichen einen Metallschaumkern 6 aufweisen.

Der Felgenstern 2 weist am Außenrand 2 übereinander angeordnete Schweiß-Ringflächen 7, 8 auf, denen Schweiß-Ringflächen 7a, 8a der Felge 3 zum Verbinden gegenüberstehen.

Der Metallschaumkern 6 ist mit einem Kernteil 11 (Fig. 2) in einem Oberkern 9 eines Kokillenwerkzeugs, das nicht näher dargestellt ist, positioniert gelagert. Hierzu ist der Kernteil 11 aus dem zu bildenden Hohlraum der Speiche 4 zwischen den Schweiß-Ringflächen 7, 8 herausgeführt. Der Teilkern 11 erstreckt sich von der Ebene X-X im Grund des Oberkerns 9 bis zur Ebene Y-Y, die an der Innenseite des Fahrzeugsternrandes 12 endet.

In Figur 3 ist ein anderer Schnitt als in Figur 2 gezeigt, der Kernteil 11a des Kerns 11 ist durch sogenannte Schieber 13 in der Dicke vermindert. Diese Schieber 13 haben die Aufgabe einen gewünschten Wärmehaushalt beim oder während des Gießens und in der Erkaltungsphase zu ermöglichen.

Nach dem Gießen des Rades 1 wird der Kernteil 11, 11a entlang der Kante 14 abgeschnitten, so daß sich ein Ringraum 5 bildet, der die Schweiß-Ringflächen 7, 8 und 7a, 8a einschließt.

Die Verbindung des Felgensterns 2 mit der Felge 3 kann auch über eine andere Art der Schweißung, wie beispielsweise über eine Strahlschweißung, eine Plasmaschweißung oder eine Laserstrahlschweißung oder über einen Klebevorgang erfolgen.

In Figur 1 ist eine gleichmäßige Wanddicke der Hohlspeiche 4 dargestellt. Diese Wanddicken können aufgrund des im Rad verbleibenden Metallschaumkerns auch unterschiedlich entsprechend den Festigkeitsanforderungen ausgebildet sein. Auch sind vom Metallschaumkern umschlossene Rippenstege, zylindrische Ansätze oder dgl. Verstärkungsteile möglich.

## Patentansprüche

1. Zweigeteiltes Rad für ein Kraftfahrzeug mit in einem Felgenstern (2) zwischen Luftöffnungen angeordneten hohlen Speichen (4), die im Felgenstern (2) einen verbleibenden Kern (6) aus einem Metallschaum aufweisen und der Felgenstern (2) mit der Felge (3) über eine Reibschweißung zwischen zwei beabstandeten Schweiß-Ringflächen (7, 8) und (7a, 8a) des Felgensterns (2) und der Felge (3) miteinander verbunden sind.

2. Zweigeteiltes Rad nach Anspruch 1, **dadurch gekennzeichnet, daß** der Kern (6) aus einem Metallschaum zur Lagerung im Kokillenwerkzeug (9, 10) mit einem Kernteil (11, 11a) aus den Öffnungen zwischen den beabstandeten Schweiß-Ringflächen (7, 8) des Felgensterns (2) herausgeführt und in der Kokille gelagert ist.

3. Mehrteiliges Rad nach den Ansprüchen 1 oder 2, **dadurch gekennzeichnet, daß** der herausgeführte Kernteil des Metallschaums (6) in einer Ebene (X-X) im Grund des Oberkerns (9) des Kokillenwerkzeugs abgestützt ist und die Schweiß-Ringfläche (7, 8) einschließend sich bis zur Ebene (Y-Y) der Hump-Fläche (12) erstreckt und in der Ebene (Y-Y) eine Teilung des Kokillenwerkzeugs in den Oberkern (9) und einen Unterkern (10) erfolgt.

4. Zweigeteiltes Rad nach den Ansprüchen 1, 2 oder 3, **dadurch gekennzeichnet, daß** zwischen der Ebene (Y-Y) und einer durch die äußere Schweiß-Ringfläche (7) verlaufenden Ebene (Z-Z) umfangsseitig mehrere Schieber (13) im Kokillenwerkzeug angeordnet sind, die sich auf einer äußeren Ringfläche (12a) des Felgensterns (2) abstützen.

5. Zweigeteiltes Rad nach Anspruch 1, **dadurch gekennzeichnet, daß** in einem Bereich zwischen den beabstandeten Schweiß-Ringflächen (7, 8) und (7a, 8a) ein vom Metallschaumkern (6) freier Ringkanal (5) besteht.

6. Zweigeteiltes Rad nach einem oder mehreren der vorhergehenden Ansprüche, **dadurch gekennzeichnet, daß** die den Metallschaumkern (6) umgebenden Wandungen unterschiedliche und/oder gleiche Dicke aufweisen.

7. Zweigeteiltes Rad nach einem oder mehreren der vorhergehenden Ansprüche, **dadurch gekennzeichnet, daß** innerhalb der Hohlspeiche (4) Rippen angeordnet sind, die vom Metallschaumkern (6) umschlossen sind.
